Europäisches Patentamt

European Patent Office

Office européen des brevets

(11) Publication number: **0 370 699 B1**

## EUROPEAN PATENT SPECIFICATION

(45) Date of publication of patent specification: **02.06.93**    (51) Int. Cl.⁵: **B60C 11/00**

(21) Application number: **89311870.3**

(22) Date of filing: **16.11.89**

(54) **Vehicle tyre.**

(30) Priority: **21.11.88 JP 292392/88**

(43) Date of publication of application:
**30.05.90 Bulletin 90/22**

(45) Publication of the grant of the patent:
**02.06.93 Bulletin 93/22**

(84) Designated Contracting States:
**DE FR GB**

(56) References cited:
**EP-A- 0 269 301**
**EP-A- 0 285 695**
**CH-A- 433 035**
**US-A- 4 360 049**

(73) Proprietor: **SUMITOMO RUBBER INDUSTRIES, LTD.**
**No. 1-1, Tsutsui-cho 1-chome**
**Chuo-ku Kobe-shi Hyogo-ken 651(JP)**

(72) Inventor: **Asano, Kazuo**
**111-105, 1-1 Hiyodori-dai Kita-ku**
**Kobe-shi Hyogo-ken(JP)**
Inventor: **Hakamada, Akio c/o Kobu-ryo**
**1-1-23 Hinokuchi-cho**
**Nishinomiya-shi Hyogo-ken(JP)**

(74) Representative: **Stewart, Charles Geoffrey**
**SP TYRES UK LIMITED Tyre Technical Division**
**Fort Dunlop Birmingham B24 9OT (GB)**

EP 0 370 699 B1

Rank Xerox (UK) Business Services
(3.10/3.6/3.3.1)

## Description

Centrifugal force generated when a vehicle turns is applied to the tyres as a load acting on a portion of the tread the centre of pressure of which is located to one side of the tread centre (hereinafter referred to as the outside portion). Thus the load acting on the shoulder of the tread is larger than the load acting on the other portion of the tread, located inside the tread centre (hereinafter referred to as the inside portion). Here inside and outside refer to the inner and outer sides with reference to the vehicle path.

When the load acts on the tread as noted above, the ground contact pressure and the ground contact patch length of the outside portion of the tread are both larger than those of the inside portion of the tread. As a result there occurs the so-called shoulder wear where the shoulder of the tread is worn more rapidly than other portions of the tread. Further, since the ground contact pressure and the ground contact length of the inside portion of the tread are small, the contact property between the tread and the road surface, i.e. the grip property is degraded.

Shoulder wear causes the life of the tyre to be shortened and degrades the controllability or handling of the vehicle in turns. In order to prevent such uneven wear, it is necessary to improve the wear resistance of the outside portion of the tread. However, in a conventional tyre, the wear resistance and the grip property are in an antinomic relation to each other, so that it has hitherto been difficult to improve either one of the wear resistance or the grip property without degrading the other.

In the past it has been proposed to change a tyre's position on the wheel rim and to rotate the assemblies around the vehicle to even-out wear. However, such changes need a great deal to time, labour and skill.

US-A-4 360 049 shows a tyre according to the preamble of claim 1.

The object of the present invention is to provide a tyre in which the grip property and the wear resistance of the tread can both be improved.

Accordingly the invention provides a vehicle tyre comprising a tread having right and left portions disposed oppositely to each other either side of the tread centre and a shoulder disposed at each side of and adjacent to the tread, wherein 4.0mm < Dc-Ds < 12.0mm, where Dc-Ds is the difference between the outer diameter Dc of the tread and the outer diameter Ds of the shoulder measured at predetermined internal pressure and zero load, characterised in that 0.85 < RT < 0.98 where RT is the ratio of the effective ground contact area of one of the right and left portions to that of the other of the right and left portions measured when a predetermined maximum load acts on the tyre and the tyre is mounted on its predetermined rim and maintained under its predetermined internal pressure.

The terms used above are defined as follows:

1. the predetermined rim is that for which the tyre is designed;
2. the predetermined internal pressure is the internal pressure value selected by the designer for the design load;
3. the predetermined maximum load is the maximum allowable load to act on the tyre;
4. the ratio of the effective ground contact areas is the ratio of the smaller value of the effective ground contact area to the larger value thereof;
5. the outer diameter Dc of the tread is measured at the predetermined internal pressure and is the diametral dimension of the tread centre position under the condition when the load is zero; and
6. the outer diameter Ds of the shoulder is the outer diametral dimension of the ground contact surface at the edge in the cross direction when the camber angle is zero, at zero load and at the predetermined internal pressure.

The effective ground contact areas of the left and right portions of the tread with respect to the tread centre are obtained by fitting the tyre to the predetermined rim, inflating it to the predetermined internal pressure, loading it to the predetermined maximum load and then obtaining the area of the ground contact region of the tyre on one of the left or right portions and the of the ground contact region of the tyre on the other throughout the whole periphery of the tyre for every portion within the range of the ground contact width of the tyre.

Further, the ratio of the effective ground contact areas is obtained by dividing the smaller value of the effective ground contact areas obtained above by the larger value thereof.

The tyre according to the present invention is mounted on a vehicle such that the portion having the smaller effective ground contact area is located on the inside in the transverse direction of the vehicle. Accordingly, the pattern rigidity of the inside portion of the tread is reduced more than that of the outside portion thereof, and the grip property of the whole tyre in turning of the vehicle is improved to thereby prevent the ground contact contour from being abruptly changed. Thus, the wear energy (kg/mm) represented by the product of the ground contact pressure and the slip in turning of the vehicle is equalised for both the inside and outside portions of the tread.

If the ratio RT of the effective ground contact areas is 0.98 or more, the shoulder wear of the outside portion is increased to be the same as a conventional tyre, whereas if the ratio RT is 0.85 or less, the pattern rigidity of the inside portion is reduced too much, so that the wear of the inside portion is increased since the inside portion tends to be deformed. The value of the ratio RT of the effective ground contact areas is preferably between 0.85 and 0.95, i.e. $0.85 < RT < 0.95$, or more preferably within the range of 0.86 to 0.94, i.e. $0.86 \leqq RT \leqq 0.94$.

If the difference Dc-Ds between the outer diameters is 12.0mm or more, the ground contact pressure at the outside portion is remarkably reduced in comparison with that at the inside portion which increases the amount of slip, so that the shoulder wear in the outside portion is increased, whereas if the difference Dc-Ds is 4.0mm or smaller, the wear rate of the tread centre is increased.

As the tyre is used mounted on a vehicle such that the portion having the smaller effective ground contact area is located on the inside, transversely of the vehicle, with respect to the other portion of the tread, the grip property of the inside portion is improved, and hence the grip property of the whole tyre is improved. Further, since the wear energy (kg/mm) in turning of the vehicle is approximately equal for both the inside and the outside portions, the shoulder wear of the outside portion is reduced. Thus controllability is improved. Further, it is not then necessary to carry out the operation of rearranging the rim assemblies on the vehicle so that the tyres are worn uniformly.

Further, an index Alpha which is the product of the aspect ratio of the tyre and a ratio CTR/STR of the radius of curvature CTR of the tread in the central region which has the tyre centre in its middle and occupying 40% or less of the maximum tyre width SW to the radius of curvature STR of the tread in the outside regions between a point transversely of the tyre corresponding to 52% of the maximum tyre section width SW to a point corresponding to 72% of the maximum tyre width SW is in the range of 1.3 to 1.7.

Conventionally, the contour of the tread surface is formed by a single radius of curvature (tread radius). Then the ground contact pressure in the central region (hereinafter referred to as the intermediate region) between the tread centre and the tread shoulder is low and the slip amount in the central region is large, so that the uneven wear as noted above tends to occur. Particularly, where the ground contact areas at both side of the tread centre differ from each other as stated in the present invention where the direction of attachment to the vehicle is specified great uneven wear is produced since the uneven wear cannot be prevented by changing the position of the tyre. The present invention overcomes this problem by defining two differing tread radii one in each of the central region and the outside region.

The ground contact pressure in the intermediate region tends to generally reduce as the aspect ratio of the tyre is reduced. The inventors also found that intermediate region uneven wear is prevented if the value of the ratio CTR/STR as noted above is set to be within the range of 2.6 to 3.4 for a 50% aspect ratio tyre, range of 2.2 to 2.8 for a 60% aspect ratio tyre and between 1.9 to 2.6 for a 65% aspect ratio tyre. Thus, by setting the index Alpha in the range of 1.3 to 1.7, the ground contact pressure is prevented from being reduced while the slip amount is prevented from being increased in the intermediate region between the tread centre and the tread shoulder to prevent the intermediate region from the production of uneven wear. When Alpha is 1.3 or less, the effect in prevention of the uneven wear is hardly obtained, whereas if Alpha exceeds 1.7, the ground contact pressure in the outside region is reduced, so that uneven wear tends to occur.

Further features of the invention will be become apparent from the following description of preferred embodiments of the invention, by way of example only, with reference to the accompanying drawings, in which:

Figure 1 is a cross sectional view showing an embodiment of a tyre according to the present invention;
Figures 2 through 5 are view showing different embodiments of a tread pattern for the tyre of the present invention;
Figure 6 is a graph showing the distribution of wear energy in the tread.

The tyre 10 has a tread pattern 16 including a plurality of grooves 12 extending in the circumferential direction of the tyre and a plurality of grooves 14 communicating with the corresponding grooves 12 and extending in the transverse direction intersecting the grooves 12. The tread pattern 16 has block shapes which are different in the left portion 20 and the right portion 22 with respect to the tread centre 18. Accordingly, the shape and the arrangement of the blocks 24 in the left portion 20 are not the same as those of the blocks 26 in the right portion 22.

The effective ground contact area RL of the left portion 20 and the effective ground contact area RR of the right portion 22 are selected such that the effective ground contact area RL of the left portion 20 is larger than that RR of the right portion 22 and a value RR/RL obtained by dividing the effective ground contact area RR of the right portion 22 by that RL of the left portion 20 which is the ratio RT is set to be

3

within the following range of 0.85 to 0.98 such that 0.85 < RT < 0.98.

The effective ground contact areas RL, RR of the left and right portions 20, 22 are measured by attaching the tyre 10 to its standard rim, inflating and maintaining the internal pressure in the tyre 10 at the predetermined value, and then obtaining the areas of the ground contact portions existing in the range of the ground contact width W at respective portions 20, 22 throughout the whole periphery of the tyre 10 when the maximum allowable load acts on the tyre 10. In other words, the effective ground contact areas RL, RR of the left and right portions 20, 22 are respectively obtained as the sum of the areas at portions in the ground contact width W of the blocks 24, 26 existing in the range of the tread centre 18 to a half of the ground contact width W, i.e. W/2.

The outer diameter Dc of the tread and the outer diameter Ds of the tread shoulder are designed such that the difference Dc-Ds between the outer diameters is within the range of 4.0mm to 12.0mm such that 4.0mm < Dc-Ds < 12.0mm.

The outer diameters Dc, Ds are accurately obtained by measuring the outer peripheral length dimension of the tread centre position and the outer peripheral length dimension of the transverse edge or end point of the ground contact area by the use of a tape measure under the condition that the load is zero, and then dividing the measured value by the ratio of the circumference of a circle to its diameter.

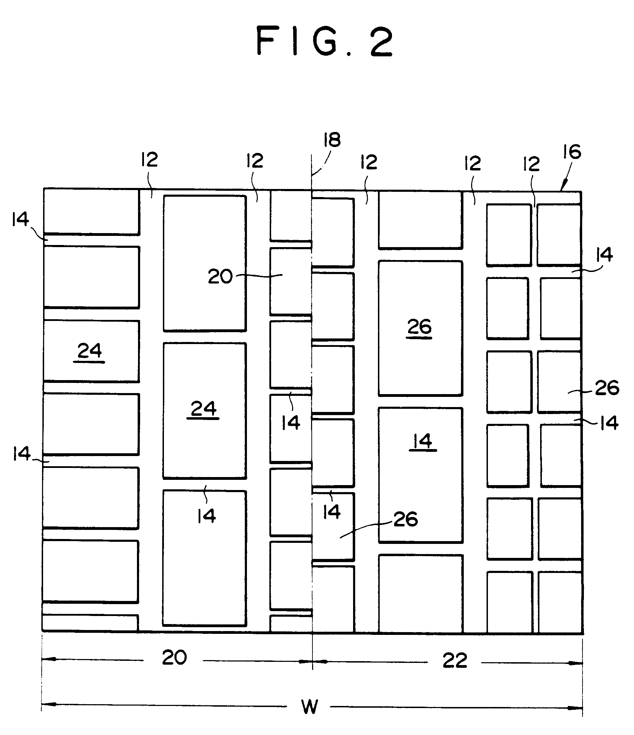

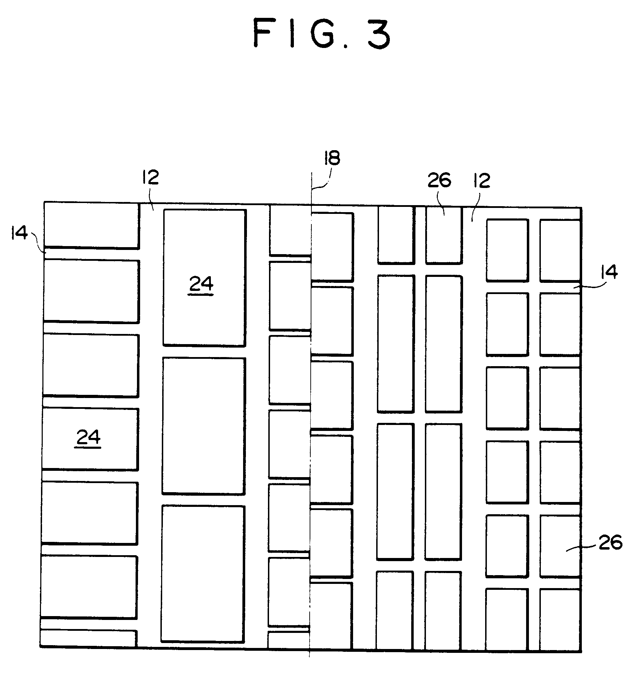

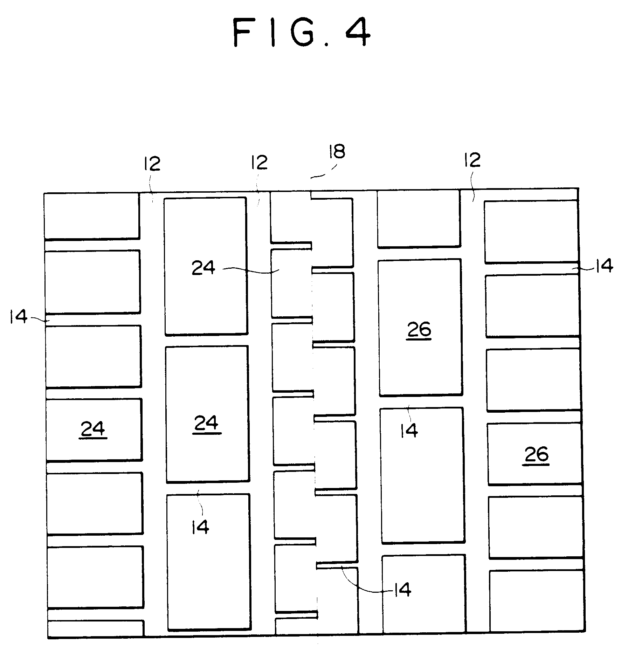

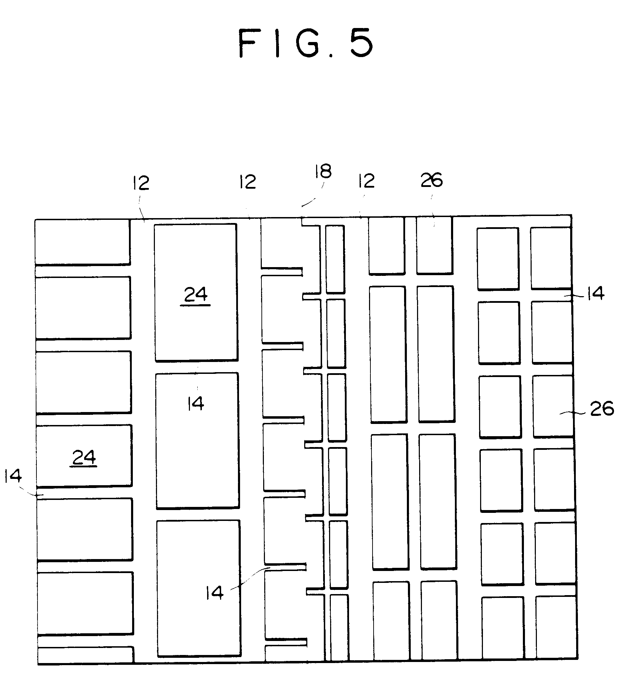

The tread pattern 16 is not limited to the example shown in figure 2, but it may be of other shapes as shown in figures 3 through 5, for example.

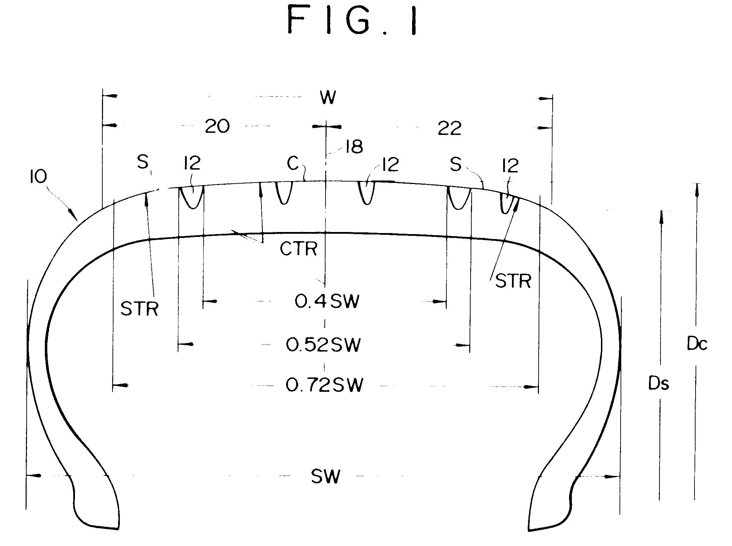

Referring to Figure 1, the index Alpha which is the product of the aspect ratio of the tyre and the ratio CTR/STR of the radius of curvature CTR of the tread in the intermediate region C which region has the tyre centre in the middle and occupies 40% or less of the maximum tyre section width SW to the radius of curvature STR of the tread in the outside region S from the point corresponding to 52% of the maximum tyre section width SW to the point corresponding to 72% of the maximum tyre width SW is within the range of 1.3 to 1.7.

As examples tyres of 195/65R14 were made as embodiments 1 and 2 and comparative examples 1 through 10. The ratio (RR/RL) of the effective ground contact area of the inside portion to that of the outside portion and the difference (Dc-Ds) between the outer diameter dimensions were selected as shown in Table 1.

The tyres were fitted to the front wheels of a passenger car such that the portions having the smaller effective ground contact area were located on the inside of the car, and then the amounts of wear ML in the outside portion of the tread MR in the inside portion during use were measured. The ratio of the wear amounts ML and MR is represented as the wear ratio ML/MR in Table 1, and the controllability is represented by a mark allocated by the driver in Table 1.

Referring to Table 1, the column of the pattern designates the drawing number showing the tread pattern used. The wear amount is the shoulder wear. The higher the controllability mark the better is the vehicle controllability.

As is apparent from Table 1, according to the tyres of the embodiments 1 and 2, each of the ratio RR/RL of the effective ground contact areas and the difference Dc-Ds between the outer diameter dimensions is within a predetermined range. The tyres of the embodiments 1 and 2 were shown to have advantages in that the wear amount in the outside portion is approximately equal to that in the inside portion, and the controllability was improved.

On the contrary, the tyre of the comparative example 1 had a large ratio for the effective ground contact areas and a small difference between the outer diameter dimensions in comparison with those of the tyre according to the embodiments 1 and 2. The tyre of the comparative example 1 had the disadvantage that the wear amount in the outside portion was remarkably large, while the controllability was also degraded.

Each of the tyres of the comparative examples 2 and 3 had the difference between the outer diameter dimensions smaller than those of the tyres of the embodiments 1 and 2, and each of the comparative examples 2 and 3 had poor controllability.

The tyre of the comparative example 4 had the ratio of the effective ground contact areas and the difference between the outer diameter dimensions smaller than those of the tyres of the embodiments 1 and 2. The tyre of the comparative example 4 had a large wear amount in the inside portion and degraded controllability.

The tyre of comparative example 5 had a ratio of effective ground contact areas larger than those the tyres of the embodiments 1 and 2. The tyre of the comparative example 5 had the disadvantage that the wear amount in the outside portion was remarkably large.

The tyre of the comparative example 6 had the ratio of the effective ground contact areas smaller than those of the tyres of the embodiments 1 and 2. The tyre of the comparative example 6 had the disadvantage that the wear amount in the inside portion was large.

The tyre of the comparative example 7 had the ratio of the effective ground contact areas larger than those of the tyres of the embodiments 1 and 2. Comparative example 7 had a wear amount in the outside portion which was remarkably large and the controllability was degraded.

Each of the tyres of the comparative examples 8 and 9 had the difference between the outer diameter dimensions larger than those of the tyres of the embodiments 1 and 2. Comparative examples 8 and 9 had disadvantages in that the wear amount in the outside portion was large and the controllability was degraded.

The tyre of the comparative example 10 had a small ratio of the effective ground contact areas and a large difference between the outer diameter dimensions in comparison with the tyres of the embodiments 1 and 2. Comparative example 10 had the disadvantages that the wear amount in the inside portion was large and the controllability was degraded.

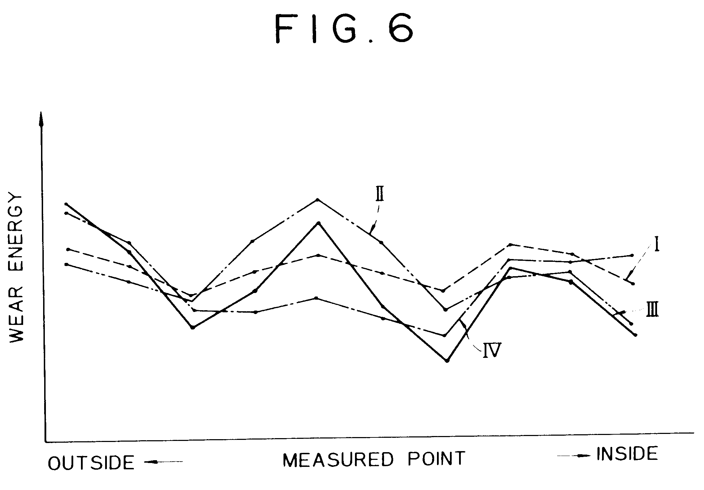

The distribution of the wear energy for each of the tyres according to embodiment 2 and the comparative examples 1, 5 and 7 are designated by symbols I, II, III and IV in Figure 6. The wear energy was measured at +0.6 degrees of camber angle and 1 degree of toe-in.

As is apparent from Figure 6, the tyre of the present invention had a smaller change of wear energy in the widthwise direction of the tread than the tyres of the comparative examples 1, 5 and 7, so that the change of the wear amount in each portion in the widthwise direction of the tread was reduced.

Table 1

| | Pattern | RR/RL | Dc-Ds | CTR/STR | $\alpha$ | ML/MR | Examination Mark |
|---|---|---|---|---|---|---|---|
| Embodiment 1 | Fig. 2 | 0.94 | 8.20 | 2.2 | 1.43 | 1.01 | 3.4 |
| Embodiment 2 | Fig. 3 | 0.86 | 8.00 | 2.0 | 1.30 | 1.02 | 3.5 |
| Comparative Example 1 | Fig. 4 | 1.00 | 3.60 | 1.8 | 1.17 | 1.52 | 3.1 |
| Comparative Example 2 | Fig. 2 | 0.94 | 3.90 | 1.9 | 1.24 | 1.01 | 3.2 |
| Comparative Example 3 | Fig. 5 | 0.86 | 3.80 | 1.9 | 1.24 | 1.02 | 3.3 |
| Comparative Example 4 | Fig. 3 | 0.80 | 3.70 | 1.8 | 1.17 | 0.80 | 3.3 |
| Comparative Example 5 | Fig. 4 | 1.00 | 8.60 | 2.0 | 1.30 | 1.55 | 3.4 |
| Comparative Example 6 | Fig. 5 | 0.80 | 8.50 | 2.0 | 1.30 | 0.85 | 3.5 |
| Comparative Example 7 | Fig. 4 | 1.00 | 12.0 | 2.4 | 1.56 | 1.89 | 3.5 |
| Comparative Example 8 | Fig. 2 | 0.94 | 12.5 | 2.5 | 1.63 | 1.25 | 3.2 |
| Comparative Example 9 | Fig. 3 | 0.86 | 12.6 | 2.5 | 1.63 | 1.35 | 3.3 |
| Comparative Example 10 | Fig. 5 | 0.80 | 12.3 | 2.4 | 1.56 | 0.85 | 3.3 |

## Claims

1. A vehicle tyre comprising a tread having right and left portions (20,22) disposed oppositely to each other either side of the tread centre (18) and a shoulder disposed at each side of and adjacent to the tread, wherein 4.0mm < Dc-Ds < 12.0mm where Dc-Ds is the difference between the outer diameter Dc of the tread and the outer diameter Ds of the shoulder measured at predetermined internal pressure and zero load, characterised in that 0.85 < RT < 0.98 where RT is the ratio of the effective ground contact area of one of the right and left portions (20,22) to that of the other of the right and left portions (20,22) measured when a predetermined maximum load acts on the tyre and the tyre is mounted on its predetermined rim and maintained under its predetermined internal pressure.

2. A tyre according to claim 1 characterised in that a ratio Alpha is in the range of 1.3 to 1.7, where Alpha is the product of the aspect ratio of the tyre and the ration CTR/STR of the radius of curvature CTR of the tread in the intermediate region (C) having the tyre centre at the middle and occupying 40% or less of the maximum tyre section width SW to the radius of curvature STR of the tread in the outside region (S) between a point transversely of the tyre corresponding to 52% of the maximum tyre section width SW to a point corresponding to 72% of the maximum tyre section width SW.

**Patentansprüche**

1. Fahrzeugreifen mit einem Laufstreifen mit jeweils linken und linken Abschnitten (20, 22), die einander gegenüber zu beiden Seiten der Laufstreifenmitte (18) angeordnet sind, und mit je einer die an jeder Seite benachbart zum Laufstreifen angeordneten Schulter, bei dem 4,0 mm < Dc-Ds < 12,0 mm ist, wobei Dc-Ds die Differenz zwischen dem Außendurchmesser Dc des Laufstreifens und dem Außendurchmesser Ds der Schulter ist, gemessen bei dem vorbestimmten Innendruck und Last Null, dadurch gekennzeichnet, daß 0,85 < RT < 0,98, wobei RT das Verhältnis der effektiven Bodenberührungsfläche eines der rechten oder linken Abschnitte (20, 22) zu der Fläche des jeweils anderen linken oder rechten Abschnitts (22, 20) ist, gemessen, wenn eine vorbestimmte Maximallast auf den Reifen einwirkt und der Reifen auf seine vorbestimmte Felge aufgezogen und unter Einwirkung seines vorbestimmten Innendrucks gehalten ist.

2. Reifen nach Anspruch 1, dadurch gekennzeichnet, daß ein Verhältnis Alpha im Bereich von 1,3 bis 1,7 liegt, wobei Alpha das Produkt des Querschnitts-Verhältnisses des Reifens mit dem Verhältnis CTR/STR des Krümmungsradius CTR der Lauffläche in dem Zwischenbereich (C) ist, der die Reifenmitte in der Mitte hat und 40% oder weniger der maximalen Reifenquerschnittsbreite SW einnimmt, zu dem Krümmungsradius STR des Laufstreifens in dem Außenabschnitt (S) zwischen einer querab liegenden Stelle des Reifens, die 52% der maximalen Reifenquerschnittsbreite SW entspricht, und einer Stelle, die 72% der maximalen Reifenquerschnittsbreite SW entspricht.

**Revendications**

1. Pneumatique pour véhicule, comprenant une bande de roulement ayant des parties droite et gauche (20, 22) qui sont opposées l'une à l'autre de part et d'autre du centre (18) de la bande de roulement, et un épaulement disposé de chaque côté et adjacent à la bande de roulement, dans lequel 4,0 mm < Dc-Ds < 12,0 mm et dans lequel Dc-Ds est la différence entre le diamètre externe Dc de la bande de roulement et le diamètre externe Ds de l'épaulement, mesurée à une pression interne prédéterminée et pour une charge nulle, caractérisé en ce que 0,85 < RT < 0,98, RT étant le rapport de la surface efficace de contact avec le sol de l'une des parties droite et gauche (20, 22) à l'autre de ces parties droite et gauche (20, 22), mesuré lorsqu'une charge maximale prédéterminée agit sur le pneumatique et lorsque le pneumatique est monté sur la jante prédéterminée et est maintenu à sa pression interne prédéterminée.

2. Pneumatique selon la revendication 1, caractérisé en ce qu'un rapport alpha est compris entre 1,3 et 1,7, ce rapport alpha étant le produit du rapport d'allongement du pneumatique et du rapport CTR/STR du rayon de courbure CTR de la bande de roulement dans la région intermédiaire (C) ayant le centre du pneumatique au milieu et occupant au plus 40 % de la largeur maximale SW de la section du pneumatique, et du rayon de courbure STR de la bande de roulement dans la région externe comprise entre un point disposé transversalement au pneumatique à 52 % de la largeur maximale SW de la section du pneumatique et un point correspondant à 72 % de cette largeur maximale SW de la section du pneumatique.

# FIG. 1

EP 0 370 699 B1

# FIG. 2

# F I G. 3

# F I G. 4

# F I G . 5

# F I G . 6

WEAR ENERGY

II

I

III

IV

OUTSIDE ◄—     MEASURED POINT     —► INSIDE